Europäisches Patentamt

European Patent Office

Office européen des brevets

(19)

(11) **EP 0 968 757 A1**

(12) **DEMANDE DE BREVET EUROPEEN**

(43) Date de publication:
**05.01.2000 Bulletin 2000/01**

(51) Int Cl.[7]: **B01D 71/02**, B01D 53/32,
A23L 3/3418, A23L 3/3436

(21) Numéro de dépôt: **99401619.4**

(22) Date de dépôt: **29.06.1999**

(84) Etats contractants désignés:
**AT BE CH CY DE DK ES FI FR GB GR IE IT LI LU
MC NL PT SE**
Etats d'extension désignés:
**AL LT LV MK RO SI**

(30) Priorité: **03.07.1998 FR 9808523**

(71) Demandeur: **L'AIR LIQUIDE, SOCIETE ANONYME
POUR
L'ETUDE ET L'EXPLOITATION DES PROCEDES
GEORGES CLAUDE
75321 Paris Cédex 07 (FR)**

(72) Inventeurs:
- **Del Gallo, Pascal
  91190 Gif sur Yvette (FR)**
- **Lagrange, Gilles
  91470 Forges les Bains (FR)**
- **Prost, Lucie
  78220 Viroflay (FR)**

(74) Mandataire: **Conan, Philippe Claude et al
L'Air Liquide S.A.,
DSPI,
Services Brevets et Marques,
75 Quai d'Orsay
75321 Paris Cedex 07 (FR)**

(54) **Procédé pour minimiser l'oxydation des produits alimentaires**

(57)     Procédé de traitement de produits alimentaires (12), pour inhiber, voire éliminer, les effets néfastes de la présence d'oxygène dans l'atmosphère se trouvant en contact desdits produits et, plus particulièrement, de la surface externe desdits bains, caractérisé en ce que l'on extrait une quantité non nulle d'oxygène de ladite atmosphère, avec un dispositif (13a) mettant en oeuvre un électrolyte solide conducteur d'ions $O^{2-}$, et essentiellement imperméable aux gaz.

Application à la conservation des bains de friture.

FIG.1

Printed by Jouve, 75001 PARIS (FR)

**Description**

L'invention a pour objet un procédé d'inhibition de l'oxydation des produits alimentaires.

Les produits alimentaires, lors de leur fabrication, préparation ou utilisation, sont susceptibles d'être exposés à l'air ambiant, d'où il peut en résulter, une oxydation de certains de leurs composés, la détérioration de leur qualité et le raccourcissement de leur durée de vie. En particulier, les huiles alimentaires, qui sont constituées principalement d'esters d'acides gras et de glycérol, lesdits esters pouvant comporter des insaturations sur leur chaîne hydrocarburée, subissent au cours du temps, des réactions catalysées par la lumière et la température, telles que l'hydrolyse et l'oxydation, qui entraînent la dégradation desdits esters en acides gras, en peroxydes d'acides gras et en autres produits de dégradations ; ceci a pour conséquence, l'abaissement du point de fumée des bains d'huile, leur coloration, et la baisse de leur qualité, qui elles-mêmes influent sur les qualités gustatives des aliments qui y sont cuits.

Pour empêcher la dégradation des produits alimentaires ou des huiles, lors de leur stockage, de leur transport ou de leur utilisation, on utilise aujourd'hui l'inertage gazeux de ceux-ci par de l'azote. Dans le brevet américain publié sous le numéro US 5,298,271, il est décrit une méthode de stockage et de transport de grandes quantités d'huile de palme consistant à maintenir en permanence une atmosphère pauvre en oxygène, à savoir une atmosphère enrichie en azote de concentration supérieure à 99.5%, au-dessus des bains d'huile, que ce soit après raffinage, lors du stockage, lors du transvasement dans les unités de transport et lors du transport. La formation d'acides gras, de peroxydes et autres produits de dégradation, est alors fortement réduite. Les auteurs ont montré que la méthode n'est efficace que si la teneur maximale en oxygène dans l'atmosphère au-dessus des bains est inférieure ou égale à 1% en volume ; dans le cas contraire, il y a une forte augmentation du taux d'acides gras et du taux de peroxydes. Cependant, cette méthode, ainsi que celle décrite dans la demande de brevet européen publiée sous le numéro EP 0580896, ne sont pas satisfaisantes lorsqu'il s'agit de petites applications, comme l'épuration d'un petit volume gazeux au-dessus d'un bain alimentaire de quelques litres, principalement en raison des contraintes liées à l'échelle de ces méthodes.

Une autre solution consiste à inerter non seulement l'atmosphère au-dessus des bains alimentaires, mais également à injecter de l'azote dans le bain, que celui-ci soit en fonctionnement ou à l'arrêt. Le procédé décrit dans la demande internationale de brevet publiée sous le numéro WO 95/27401 consiste à injecter, par l'intermédiaire de petites buses d'injection de diamètre de l'ordre de 5μm, de l'azote sous forme divisée dans le bain industriel de friture contenant environ 1.5 à 5m$^3$ d'huile. Les analyses de ces bains montrent qu'avec un inertage sous azote, que ce soit en fonctionnement à 180°C, à un débit d'azote de 5 à 10m$^3$/heure ou à l'arrêt à température ambiante, à un débit de 2m$^3$/heure, les taux en acides gras libres et peroxydes sont nettement plus faibles. Aujourd'hui, le système le plus fréquemment employé est l'inertage partiel des cuves par balayage.

D'autres méthodes décrites dans la littérature mettent en oeuvre la technique d'absorption en faisant circuler le liquide à conserver à travers un module de filtration contenant des absorbants de diverses natures. Ces absorbants peuvent contenir des antioxydants imprégnés sur divers supports ; l'utilisation de charbons actifs recouverts d'agents antioxydants est décrite dans le brevet américain publié sous le numéro US 5,348,755 ; l'utilisation d'oxyde de magnésium imprégné sur du charbon actif est décrite dans le brevet américain publié sous le numéro US 4,125,482 ; l'utilisation de solutions aqueuses contenant de l'EDTA, acide éthylènediaminetétraacétique, est décrite dans le brevet américain publié sous le numéro US 4,968,518 ; l'utilisation de solutions d'acides citrique et ascorbique, est décrite dans le brevet américain publié sous le numéro US 5,068,115. On peut également citer un procédé par décantation, décrit dans le brevet américain publié sous le numéro US 5,008,122, consistant à réaliser un mélange entre les huiles de friture et des solvants possédant des gravités spécifiques différentes. Le mélange formé est ensuite séparé par gravité, un des flux, contenant le solvant et les impuretés est rejeté, alors que l'autre, constitué d'huile propre, est réinjecté dans la cuve de friture.

De manière générale, tous les procédés décrits ci-dessus ne sont appropriés qu'aux grands volumes de produits alimentaires, par exemple supérieurs au mètre cube, et sont difficilement adaptables aux petites installations comme les bains d'huile des établissements de restauration rapide. En effet, ils nécessitent notamment l'installation d'injecteurs de gaz et de capots, la réalisation d'une étanchéité parfaite du système cuve/capot, la pose de lignes de gaz, de systèmes de contrôle des débits gazeux, et engendrent des problèmes de stockage des bouteilles.

La demanderesse a donc cherché à mettre au point un procédé et un dispositif permettant de minimiser l'oxydation des produits alimentaires, tout en étant simples à mettre en oeuvre et adaptés aux petites installations, telles que celles des restaurants.

L'invention a pour objet un procédé de traitement de produits alimentaires, pour inhiber, voire éliminer, les effets néfastes de la présence d'oxygène dans l'atmosphère se trouvant en contact de la surface externe desdits produits, caractérisé en ce que l'on extrait une quantité non nulle d'oxygène de ladite atmosphère, par mise en oeuvre d'un électrolyte solide conducteur d'ions O$^{2-}$, et essentiellement imperméable aux gaz . Le procédé tel que défini ci-dessus, est notamment mis en oeuvre dans la conservation des bains d'huiles comestibles et, plus particulièrement, des bains d'huiles de friture .

Dans le procédé tel que décrit ci-dessus, l'électrolyte solide est mis en fonctionnement selon un mécanisme purement électrochimique, engendré par un générateur de courant ou selon un procédé de semi-perméabilité électrochimique, engendré par la différence de pression partielle en oxygène entre chacune des faces dudit électrolyte. Dans le cas d'un mécanisme purement électrochimique, l'électrolyte solide est en contact avec deux électrodes, respectivement une anode et une cathode poreuses aux gaz, elles mêmes reliées à un générateur de courant .

Selon une première variante du procédé tel que défini précédemment, l'électrolyte solide comprend au moins un oxyde céramique dopé . L'oxyde céramique dopé est par exemple choisi parmi la zircone ($ZrO_2$), la thorine ($ThO_2$), l'oxyde de cérium ($CeO_2$), l'oxyde d'hafnium ($HfO_2$), et l'oxyde de bismuth ($Bi_2O_3$), dopé avec un ou plusieurs oxydes choisis parmi l'oxyde de magnésium (MgO), l'oxyde d'yttrium ($Y_2O_3$), l'oxyde de calcium (CaO), de lanthane ($La_2O_3$,) d'ytterbium ($Yb_2O_3$) de strontium (SrO), de scandium ($Sc_2O_3$) et de baryum. (BaO) et, de préférence, $ZrO_2$ stabilisé au $Y_2O_3$ (YSZ), $ZrO_2$ stabilisé au CaO, $ZrO_2$ stabilisé au $Sc_2O_3$, $Bi_2O_3$ stabilisé au $Y_2O_3$ (BY), $CeO_2$ stabilisé au $Y_2O_3$, $CeO_2$ stabilisé au CaO et $ThO_2$ stabilisé au $Y_2O_3$ . Il peut aussi s'agir d'oxydes céramiques dopés par deux oxydes, comme ceux décrits dans le brevet américain publié sous le numéro US 5,385,874.

Selon une deuxième variante du procédé, objet de la présente invention, l'électrolyte solide comprend au moins un composé choisi parmi les dérivés de $Bi_4V_2O_{11}$, tels que décrits dans la demande internationale de brevet publiée sous le numéro WO 91/01274 et connus sous le nom générique de BIMEVOX. Ces derniers, dans lesquels une fraction variable du vanadium est remplacée par un métal choisi, notamment parmi les métaux alcalino-terreux, les métaux de transition, les terres rares ou les éléments des groupes III à V de la classification périodique d'éléments chimiques de Mendéléev, sont des conducteurs par ions $O^{2-}$ et leur conductivité anionique à 500 °C est du même ordre de grandeur que celle, à 800°C, des zircones stabilisées. La substitution partielle des éléments constitutifs de $Bi4V2011$, stabilise le type structural de la phase gamma et maintient, dans le réseau des ions $O^{2-}$, un taux de lacunes suffisant pour permettre la conductivité anionique. Les atomes d'oxygène des couches $Bi_{2-x}M_yO_2$ fortement liés aux atomes de bismuth, ne pouvant se déplacer, il s'agit donc d'une conductivité essentiellement bi-dimensionnelle ; la conductivité anionique de cette phase est remarquable, puisqu'elle atteint $10^{-3}$ $\Omega^{-1}cm^{-1}$ vers 200°C. Ces BIMEVOX sont mis en oeuvre seuls ou en mélange avec des agents de frittage inertes chimiquement vis à vis desdits BIMEVOX, dans des cellules électrochimiques, telles que celles décrites dans les demandes internationales de brevet publiées sous les numéros WO 94/06544 et WO 94/06545, et dans des cellules fonctionnant par semi-perméabilité électrochimique, telles que celles décrites dans la demande de brevet français publiée sous le numéro FR 2698016.

Par au moins un composé de la famille des BIMEVOX, il est signifié qu'il peut s'agir d'un seul ou d'un mélange de ces dits composés. Par le terme générique de BIMEVOX, il est désigné les oxydes dérivés de $Bi_4V_2O_{11}$, dans lesquels une fraction variable du vanadium est remplacée par un métal, et notamment les composés de formule (I) :

$$(Bi_{2-x}M_xO_2)(V_{1-y}M'_yO_z) \tag{I}$$

dans laquelle :

- M représente un ou plusieurs métaux de substitution du bismuth, choisi(s) parmi ceux ayant un nombre d'oxydation inférieur ou égal à 3, et
- M' représente un ou plusieurs éléments de substitution du vanadium choisi(s) parmi ceux ayant un nombre d'oxydation inférieur, égal ou supérieur à 5, les valeurs limites de x, y et donc z étant fonctions de la nature des éléments substituants M et M'.

Parmi les composés de formule (I), telle que définie précédemment, on peut citer ceux dans lesquels seul l'atome de vanadium est partiellement substitué par un ou plusieurs éléments. Ces composés répondent alors à la formule (II) :

$$(Bi_2 O_2)(V_{1-y} M'_y O_z) \tag{II}$$

dans laquelle M', est tel que défini ci-dessus, y étant non nul et est, plus particulièrement supérieur ou égal à environ 0,05 et inférieur ou égal à 0,5 .

- M' est avantageusement sélectionné parmi les métaux alcalins, les métaux alcalino-terreux, les métaux de transition, les éléments des groupes III à V de la classification périodique des éléments chimiques de Mendéléev ou parmi les terres rares . Quand M' représente un métal de transition, il est plus particulièrement choisi parmi les atomes de zinc, de cuivre, de manganèse, de nickel, de cobalt de fer ou de cadmium. Quand M' représente un métal alcalino-terreux, il est plus particulièrement choisi parmi les atomes de calcium, de strontium ou de baryum.

En tant que métal ayant un degré d'oxydation égal à 3, M' peut aussi représenter un atome d'indium, d'aluminium ou d'antimoine. En tant que métal ayant un degré d'oxydation égal à 4, M' peut aussi représenter un atome d'étain, de titane ou de ruthénium. En tant que métal ayant un degré d'oxydation égal à 5, M' peut aussi représenter un atome de niobium, de tantale ou de phosphore. M' peut aussi représenter un atome de métal alcalin comme le sodium ou, en tant que métal ayant un degré d'oxydation égal à 2, représenter un atome de Pb. Parmi les composés de formule (I), telle que définie précédemment, on peut citer ceux dans lesquels seul l'atome de bismuth est substitué partiellement par un ou plusieurs métaux . Ces dérivés répondent alors à la formule (III) :

$$(Bi_{2-x} M_x O_2)(VO_z) \qquad\qquad (III)$$

dans laquelle x est non nul et M est tel que défini ci-dessus et est plus particulièrement choisi parmi les terres rares tel que le lanthane.

On peut encore citer parmi les composés de formule (I), ceux dans lesquels l'atome d'oxygène est partiellement substitué par du fluor, ou bien ceux comportant des substitutions mixtes du bismuth et du vanadium et correspondent à la formule (I) ci-dessus dans laquelle x et y sont non nuls, et plus particulièrement les composés de formule (IV) :

$$(Bi_{2-x} Pb_x O_2)(V_{1-y} Mo_y O_z) \qquad\qquad (IV)$$

Dans le procédé objet de la présente invention, l'électrolyte solide, constitué d'un ou de plusieurs dérivés BIMEVOX est, soit en contact avec deux électrodes dites volumiques, respectivement une anode et une cathode poreuses aux gaz, soit constitue en lui-même, une structure homogène constituée d'un ou de plusieurs dérivés électrolytes solides BIMEVOX à électrodes dynamiques créées " in situ ", réversibles et auto-adaptatives .

Par structure homogène, il est signifié dans la définition précédente que, contrairement aux dispositifs de l'état de la technique, comme la cellule à électrode volumique citée plus haut, qui est constituée d'un électrolyte solide et de deux électrodes reliées à des collecteurs de courant, lesdites électrodes pouvant se distinguer physiquement dudit électrolyte, la structure homogène, est un noyau d'un ou plusieurs BIMEVOX se comportant <u>à la fois</u> comme électrolyte et comme électrodes. Dans la définition qui précède, l'homme du métier appréciera aisément la différence qu'il y a entre un collecteur de courant, dont la fonction est uniquement de permettre la circulation du courant électrique en apportant les électrons à la cathode et en les récoltant à l'anode, et une électrode, dont la fonction est de catalyser la dissociation électrochimique.

Par électrodes dynamiques créées " in situ", il est signifié dans la définition précédente, que la conductivité électronique est due à la transformation :

$$vanadium\,^V \rightarrow vanadium\,^{IV}$$

du côté cathodique .

Par créées " in situ", il est signifié dans la définition précédente, que la structure homogène ne devient une structure électrode-électrolyte-électrode que par l'application d'une différence de potentiel non nulle sur les faces opposées dudit dispositif; dans l'exposé suivant, on parlera de " zones électrodes " et de " zone électrolyte " de ladite structure .

Par réversible, il est signifié dans la définition précédente, que le dispositif peut fonctionner dans un sens ou dans un autre par simple inversion de polarité du générateur de courant.

Par auto-adaptatif, il est signifié que le dispositif s'adapte par lui-même aux deux types de fonctions citées ci-dessus, à savoir : la fonction dynamique et la fonction réversibilité.

L'homme du métier appréciera aussi que l'un des avantages de la structure homogène mise en oeuvre par le procédé, objet de la présente invention, est que l'épaisseur des " zones électrodes " et de la " zone électrolyte " de ladite structure varie notamment en fonction de la température et de l'intensité du courant électrique qui lui sont appliquées, et que ce caractère dynamique permet ainsi de réguler le débit d'extraction de l'oxygène . Ainsi, plus l'intensité du courant appliqué croît à température constante, plus l'épaisseur de la zone " électrolyte " décroît, pour un débit d'extraction d'oxygène croissant.

Lorsque la cellule, telle que définie précédemment, fonctionne par électrochimie, elle est intercalée dans un circuit d'alimentation en courant électrique permettant la création d'une différence de potentiel entre ses faces opposées, par l'intermédiaire de collecteurs de courant . Ces collecteurs de courant, qui assurent à la fois l'apport des électrons à la cathode et leur évacuation à l'anode, doivent naturellement être en un métal, ou en un alliage de métaux, compatible avec les BIMEVOX, comme par exemple, l'or, l'argent, le platine, le palladium, le cuivre ou l'acier inoxydable. La forme des collecteurs de courant est déterminée de manière à optimiser l'apport des électrons à la cathode et leur évacuation de l'anode. Il s'agit généralement d'une grille d'une laque ou d'une pointe ; si nécessaire, une partie non nulle de chacun des collecteurs de courant de la cellule électrochimique mise en oeuvre, se trouve à l'intérieur de la couche d'électrode ou, le cas échéant, de la structure homogène ; lorsque le collecteur est une grille, elle présente de préférence plusieurs dizaines de noeuds / cm$^2$.

La cellule électrochimique mise en oeuvre est notamment une structure plane à faces parallèles ou une structure cylindrique creuse à section circulaire ou ovale, comportant deux faces cylindriques coaxiales . Une cellule électrochimique élémentaire à électrodes volumiques peut être représentée par le schéma (A):

CC / BIMEVOX'-CE' / électrolyte solide BIMEVOX / BIMEVOX"-CE" / CC' (A)

dans lequel CC et CC' représentent les collecteurs de courant anodique et cathodique, BIMEVOX'-CE' et BIMEVOX"-CE" représentent les deux constituants caractéristiques des électrodes volumiques en des proportions variables, c'est-à-dire d'une part un BIMEVOX et/ou d'autre part un conducteur électronique (CE), notamment un métal ou un oxyde métallique. Ce métal ou le métal de l'oxyde métallique peut être différent ou identique par rapport aux métaux des BIMEVOX. De même, les métaux ME' et ME" de BIMEVOX' et BIMEVOX" peuvent être identiques ou différents de celui ou ceux contenus dans l'électrolyte solide BIMEVOX. Les proportions pondérales varient, par exemple de 0 à 100 % de l'un des constituants de l'électrode volumique et de 100 à 0 % de l'autre (si l'on fait abstraction d'autres composés chimiques éventuellement également présents dans les électrodes volumiques) . Une cellule électrochimique élémentaire à électrodes dynamiques créées " in situ ", réversibles et auto-adaptatives peut être représentée par le schéma (B):

CC/(BIMEVOX' / ELECTROLYTE SOLIDE BIMEVOX / BIMEVOX" /CC (B) dans lequel ELECTROLYTE BIMEVOX, représente la " zone électrolyte", solide et imperméable aux gaz, CC représente les collecteurs de courant, BIMEVOX' et BIMEVOX" représentent les deux constituants caractéristiques des " zones électrodes " . Les métaux ME' et ME" de BIMEVOX' et BIMEVOX" peuvent être identiques ou différents de celui ou ceux contenus dans l'électrolyte solide BIMEVOX.

Selon une variante particulière de la présente invention le composé BIMEVOX est le: $Bi_2Co_{0,1}V_{0,9}O_{5,35}$.

Le procédé, objet de la présente invention, permet d'obtenir à la proximité de la surface des produits alimentaires, comme les bains d'huile, des teneurs en oxygène de l'ordre de 1% en volume, au lieu des 21% correspondant à la teneur normale en oxygène dans l'air atmosphérique.

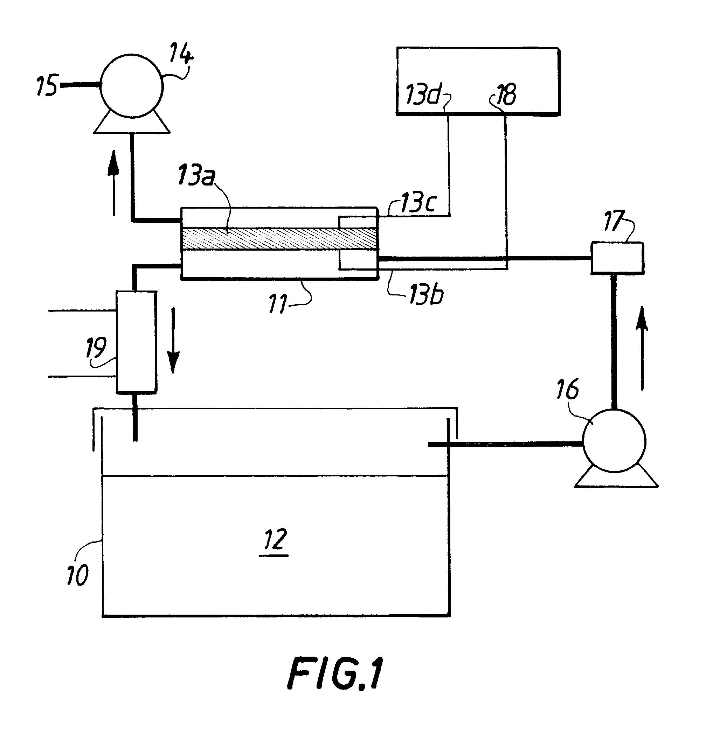

La figure 1 représente schématiquement le principe général du dispositif permettant la mise en oeuvre du procédé de l'invention.

Ce dispositif comprend une cuve 10 contenant des produits alimentaires 12. La surface libre de ces produits alimentaires est en contact avec l'air atmosphérique. Une membrane électrolyte solide 13a est disposée à proximité de la surface libre. Chaque face de la membrane est reliée à des électrodes 13b et 13c, elles même reliées à un générateur 13d. L'oxygène extrait, par la cellule électrochimique, de l'air atmosphérique présent au-dessus des produits alimentaires est évacué via une pompe 14 dans un conduit 15. La membrane est disposée dans une source de chauffage 11 permettant de la faire fonctionner à la température de travail souhaitée. La circulation de l'atmosphère à traiter est réalisée par une pompe 16. Un analyseur d'oxygène 17 est placé dans le dispositif de manière à mesurer la teneur en oxygène présente dans l'atmosphère gazeuse au-dessus des produits alimentaires. La régulation du système (température, tension) est réalisée par un boîtier de commande automatique qui, en fonction des performances demandées à la cellule, va réguler le système 18. Il peut être envisagé, si la température du flux gazeux d'atmosphère appauvrie en oxygène et revenant au-dessus des produits alimentaires est trop élevée, d'installer un refroidisseur 19 dans le système.

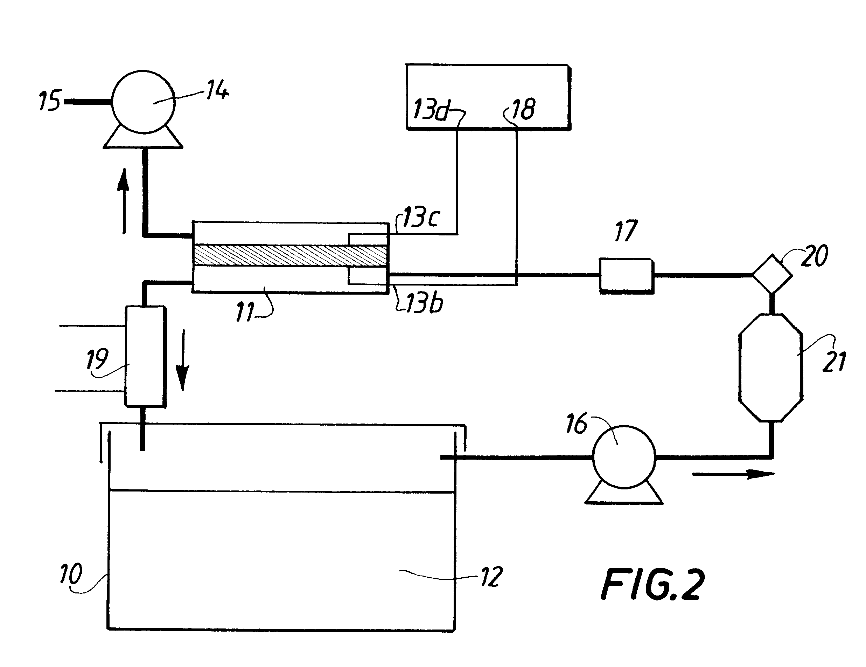

La figure 2 représente le dispositif de la figure 1 dans lequel des moyens de filtration 20 et d'absorption 21 sont placés à proximité de la cellule électrochimique ; la fonction de ces deux derniers moyens étant de protéger la cellule des graisses et impuretés provenant des produits alimentaires.

Le dispositiftel que décrit ci-dessus peut fonctionner, les produits alimentaires étant soit à la température ambiante, soit notamment dans le cas de bains d'huile de friture, à la température de fonctionnement soit environ 180°C.

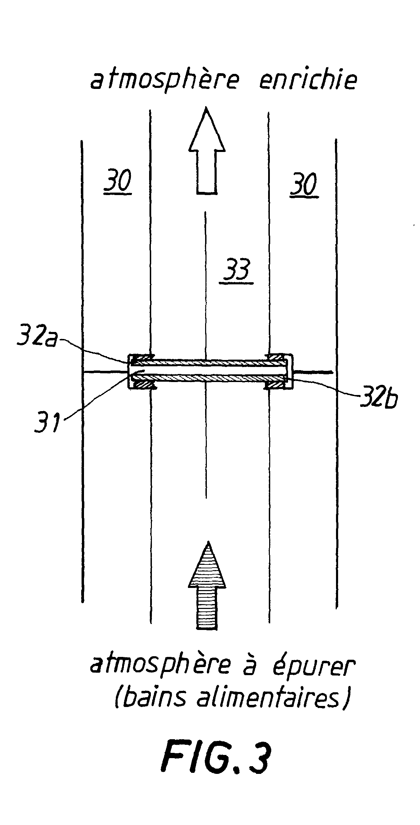

La figure 3 représente le coeur du procédé, à savoir la cellule électrochimique positionnée au sein du dispositif permettant le fonctionnement du système. La cellule est telle que celle présentée sur la figure 1 ou 2. Elle est constituée d'électrolytes solides, tels que définis précédemment ; la cellule (25) est incluse dans une enceinte chauffante (30) capable de produire des températures jusqu'à 750°C ou davantage. Préférentiellement la zone de température de travail se situera entre 300 et 600°C. Cette cellule électrochimique est soit constituée d'un électrolyte solide à base de BIMEVOX (31) et de deux électrodes volumiques soit d'une structure homogène constituée d'un ou de plusieurs dérivés BIMEVOX à électrodes dynamiques crées " in situ " réversibles et autoadaptatives et au moins de deux collecteurs de courants (33). L'électrolyte solide possédant une conductivité ionique à partir de 250 °C est porté à une température de travail entre 300 et 600 °C et est mis sous tension. On utilise une source travaillant soit à potentiel constant, soit à intensité constante. Les densités de courant de travail de la cellule sont comprises entre 10 et 2000 mA.cm$^{-2}$ pour des tensions comprises entre 0.1 et 20 V. Les conditions de fonctionnement comprennent des tensions incluses entre 0.5 et 10 V. Sous ces conditions de travail l'électrolyte solide permet d'extraire des quantités d'oxygène de l'air atmosphérique comprises entre 25 et 1000 cm$^3$.h$^{-1}$ (cellule d'environ 2 cm$^2$ de surface). On peut ainsi appauvrir d'un facteur 10 la teneur en oxygène de l'atmosphère à proximité de la surface d'un produit alimentaire jusqu'à faire passer rapidement sa teneur à moins de 2% en volume. Le risque d'oxydation des produits alimentaires, des huiles comestibles en particulier, est ainsi fortement diminué. La surface de membrane à développer va être directement fonction du volume d'atmosphères gazeuses à traiter. Dans le cas d'un volume d'une dizaine de litres (2 1 d'oxygène pur) l'emploi de cellules BIMEVOX de surface comprise entre 2 et 25 cm$^2$ est à envisager. Son positionnement par rapport à la surface du bain va être fonction de l'emploi ou non d'un dispositif de pompage de l'atmosphère à traiter. Compte tenu de la température de fonctionnement (250-500 °C), il n'est pas souhaitable que la membrane se trouve à proximité de la surface des produits alimentaires. Toutefois, son utilisation près de la surface des bains est envisageable dans la mesure où un système de filtres protecteurs protège la surface de la cellule . L' exemple concerne l'élimination de toute trace d'oxygène jusqu'à une teneur résiduelle de l'ordre de 1%, d'atmosphères gazeuses telles que l'air présentes au-dessus de produits alimentaires qu'ils soient liquides ou solides, et plus particulièrement de bains de friture ; dans ce cas précis, par installation d'un petit épurateur . Celui-ci fonctionne avec une membrane céramique à électrolyte solide . Dans une cuve est introduit un litre d'huile de palme . Le système est à température ambiante et est soumis à une agitation vigoureuse pour simuler des conditions maximales d'oxydation . Le volume d'air au-dessus des bains d'huile est d'un litre environ . On dispose une membrane électrolyte solide au-dessus de la surface du bain d'huile . Les matériaux employés sont BiCu$_{0.1}$V$_{0.9}$O$_{5.35}$ et BiCo$_{0.1}$V$_{0.9}$O$_{5.35}$. Les matériaux sont mis sous la forme de pastille par pressage uniaxial . Les épaisseurs sont comprises entre 1 et 5 mm, les diamètres entre 10 et 20 mm, les densités obtenues sont comprises entre 85 et 95 %. Le collectage de courant est réalisé par une grille d'or de maillage contrôlé. La cellule est disposée à l'intérieur d'un four selon la description de la figure 3 et est reliée à un circuit électrique (générateur de courant ou de tension) . La membrane est portée à 580 °C et est mise sous tension . Au cours des premiers instants la contribution demandée à la cellule est maximale (tension élevée, forte densité de courant) de manière à faire chuter rapidement le taux d'oxygène de 21 % en volume à 1-2 % . Le volume d'oxygène à extraire étant d'environ 210 cm$^3$, la cellule BiCo$_{0.1}$V$_{0.9}$O$_{5.35}$ peut fonctionner par exemple à 6V-1.2A (volume O$_2$ extrait : 280 cm$^3$.h$^{-1}$) durant une quarantaine de minutes . Lorsque ce taux est atteint, le système de régulation diminue le potentiel appliqué de manière à entretenir le système pour palier aux entrées d'air éventuelles liées à l'étanchéité du système . Les valeurs de fonctionnement atteintes sont alors typiquement de 1V-0.3A.

2 bains de friture A et B (2.5 l de capacité) remplis de la même huile sont mis à fonctionner à leur température d'utilisation de l'huile, soit 180°C. Les huiles sont maintenues à 180°C pendant 5h par jour durant 3 jours ; entre les périodes d'utilisation, les huiles sont refroidies comme indiqué plus loin . On procède à 4 opérations de friture par jour dans des conditions identiques pour des bains A et B, c'est-à-dire en introduisant 180g de frites lors de chaque friture et en faisant une cuisson identique . A l'issue des 5 heures de chauffage à 180°C, les bains sont refroidis dans les friteuses jusqu'à 90°C puis transvasés dans des réacteurs en verre . Le bain A de référence est stocké en réacteur sans précaution particulière, à savoir ni couvercle étanche, ni inertage. Le bain B est soumis au procédé, objet de l'invention . Les résultats des analyses, l'indice de peroxyde et l'acidité de l'huile, sont consignés dans le tableau suivant :

| Taux d'acidité (% acide oléique) | bain A | bain B |
|---|---|---|
| t=0 | 0.04 | 0.04 |
| t=1j | 0.09 | 0.09 |
| t=2j | 0.18 | 0.17 |
| t=3j | 0.28 | 0.24 |
| indice de peroxyde (mmEq/kg) | bain témoin A | bain B (méq/kg) |
| t=0 | 0.30 | 0.30 |
| t=1j | 7.3 | 6.2 |
| t=2j | 11.5 | 9.9 |
| t=3j | 9.6 | 9.1 |

Les résultats obtenus mettent en évidence que la mise en oeuvre du procédé objet de la présente invention, permet

**EP 0 968 757 A1**

de ralentir la formation de peroxydes et d'acides gras et par conséquent de prolonger la durée d'utilisation des bains de friture, tout en maintenant leur qualité.

**Revendications**

1. Procédé de traitement de produits alimentaires, pour inhiber, voire éliminer, les effets néfastes de la présence d'oxygène dans l'atmosphère se trouvant en contact de la surface externe desdits produits, caractérisé en ce que l'on extrait une quantité non nulle d'oxygène de ladite atmosphère, par mise en oeuvre d'un électrolyte solide conducteur d'ions $O^{2-}$, et essentiellement imperméable aux gaz .

2. Procédé tel que défini à la revendication 1, mis en oeuvre pour prolonger la durée d'utilisation des bains d'huiles comestibles et plus particulièrement des bains d'huiles de friture .

3. Procédé tel que défini à l'une des revendications 1 ou 2, dans lequel la séparation de l'oxygène s'effectue par voie électrochimique ou par semi-perméabilité électrochimique.

4. Procédé tel que défini à l'une des revendications 1 à 3, dans lequel l'électrolyte solide comprend au moins un oxyde céramique dopé.

5. Procédé tel que défini à la revendication 4, dans lequel l'oxyde céramique dopé est choisi parmi la zircone ($ZrO_2$), la thorine ($ThO_2$), l'oxyde de cérium ($CeO_2$),, l'oxyde d'hafnium ($HfO_2$), et l'oxyde de bismuth ($Bi_2O_3$), dopé avec un ou plusieurs oxydes choisis parmi l'oxyde de magnésium (MgO), l'oxyde d'yttrium ($Y_2O_3$), l'oxyde de calcium (CaO), de lanthane ($La_2O_3$,) d'ytterbium ($Yb_2O_3$) de strontium(SrO), de scandium ($Sc_2O_3$) et de baryum.(BaO) et de préférence, $ZrO_2$ stabilisé au $Y_2O_3$ (YSZ), $ZrO_2$ stabilisé au CaO, $ZrO_2$ stabilisé au $Sc_2O_3$, $Bi_2O_3$ stabilisé au $Y_2O_3$ (BY), $CeO_2$ stabilisé au $Y_2O_3$, $CeO_2$ stabilisé au CaO et $ThO_2$, stabilisé au $Y_2O_3$.

6. Procédé tel que défini à l'une des revendications 1 à 3, dans lequel l'électrolyte solide comprend au moins un dérivé BIMEVOX.

7. Procédé tel que défini à la revendication 6, dans lequel le dérivé BIMEVOX est choisi parmi les composés de formule (II) :

$$(Bi_2 O_2)(V_{1-y} M'_y O_z) \qquad (II)$$

dans laquelle M' représente un métal de transition, choisi parmi les atomes de zinc, de cuivre, de manganèse, de nickel, de cobalt de fer ou de cadmium et y est supérieur ou égal à environ 0,05 et inférieur ou égal à environ 0,5, et est, plus particulièrement, le $Bi_2Co_{0,1}V_{0,9}O_{5,35}$.

8. Dispositif pour la mise en oeuvre du procédé tel que défini à l'une des revendications 1 à 7, comprenant une cuve (10) munie d'un capot (10a), contenant des produits alimentaires (12) dont la surface libre est en contact avec l'air atmosphérique, une membrane électrolyte solide (13a), chaque face de la membrane étant reliée à des électrodes (13b) et (13c), elles mêmes reliées à un générateur de courant (13d), un moyen de chauffage (11) permettant de faire fonctionner ledit électrolyte à la température de travail souhaitée, une pompe (14) évacuant l'oxygène extrait, par ledit électrolyte solide, de l'air atmosphérique présent au-dessus des produits alimentaires, dans un conduit (15), une pompe (16) permettant la circulation de l'atmosphère à traiter, un moyen de mesure de la teneur en oxygène (17) dans l'atmosphère gazeuse au-dessus des produits alimentaires, un moyen de régulation (18) permettant notamment de moduler le fonctionnement dudit électrolyte solide en fonction de la teneur en oxygène de l'atmosphère gazeuse à traiter et du débit de recirculation de ladite atmosphère et, si désiré un moyen de refroidissement (19).

9. Dispositiftel que défini à la revendication 8 comportant des moyens de filtrations (20) et des moyens d'absorption (21).

**7**

FIG.1

FIG.2

atmosphère enrichie

_30_   _30_

_33_

32a

31   _32b_

atmosphère à épurer
(bains alimentaires)

# FIG.3

Office européen
des brevets

**RAPPORT DE RECHERCHE EUROPEENNE**

Numéro de la demande
EP 99 40 1619

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.CL7) |
|---|---|---|---|
| X | US 3 963 597 A (KLEITZ MICHEL ET AL) 15 juin 1976 (1976-06-15) * le document en entier * * en particulier col. 6, lignes 4-11 et fig.2 * | 1,2,4-6, 8 | B01D71/02 B01D53/32 A23L3/3418 A23L3/3436 |
| X Y Y | US 4 330 633 A (E. YOSHISATO ET AL.) 18 mai 1982 (1982-05-18)  * colonne 1, ligne 14 - ligne 21; revendication 1; exemples 1,2,4 * | 1,3-5 6,7 8 | |
| D,Y | WO 94 06544 A (L'AIR LIQUIDE) 31 mars 1994 (1994-03-31) * page 1, alinéas 1,2 * * page 5, dernier alinéa * * page 7, alinéas 1-7; exemple 1 * | 6,7 | |
| Y A | US 5 385 874 A (G. M. RENLUND ET AL.) 31 janvier 1995 (1995-01-31)  * le document en entier * | 8 1,3-5 | **DOMAINES TECHNIQUES RECHERCHES (Int.CL7)** A23L B01D |
| A | US 4 212 891 A (FUJITA YUKO ET AL) 15 juillet 1980 (1980-07-15) * le document en entier * | 1,8 | |
| A | PATENT ABSTRACTS OF JAPAN vol. 017, no. 200 (C-1050), 20 avril 1993 (1993-04-20) & JP 04 346774 A (HITACHI LTD), 2 décembre 1992 (1992-12-02) * abrégé * | 1 | |
| A | US 4 151 060 A (A.O. ISENBERG) 24 avril 1979 (1979-04-24) * le document en entier * | 1,4,5 | |

-/--

Le présent rapport a été établi pour toutes les revendications

| Lieu de la recherche | Date d'achèvement de la recherche | Examinateur |
|---|---|---|
| LA HAYE | 4 novembre 1999 | Guyon, R |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**Office européen des brevets**

# RAPPORT DE RECHERCHE EUROPEENNE

Numéro de la demande

EP 99 40 1619

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | US 4 967 295 A (S.YAMAUCHI ET AL.) 30 octobre 1990 (1990-10-30) * le document en entier * | 1 | |
| A | EP 0 428 414 A (MITSUBISHI) 22 mai 1991 (1991-05-22) * colonne 2, ligne 24 - colonne 3, ligne 15; figures * | 1,8 | |
| A | WO 95 31093 A (JOHNES) 23 novembre 1995 (1995-11-23) * le document en entier * | 1 | |
| A,D | WO 91 01274 A (UNILEVER) 7 février 1991 (1991-02-07) * page 6, ligne 20 - ligne 34; revendications 1-5,10 * | 1,3-7 | |
| D,A | FR 2 698 016 A (L'AIR LIQUIDE) 20 mai 1994 (1994-05-20) * le document en entier * | 1,3-7 | |

DOMAINES TECHNIQUES RECHERCHES (Int.Cl.7)

Le présent rapport a été établi pour toutes les revendications

| Lieu de la recherche | Date d'achèvement de la recherche | Examinateur |
|---|---|---|
| LA HAYE | 4 novembre 1999 | Guyon, R |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 99 40 1619

04-11-1999

| Document brevet cité au rapport de recherche | | Date de publication | Membre(s) de la famille de brevet(s) | | | Date de publication |
|---|---|---|---|---|---|---|
| US 3963597 | A | 15-06-1976 | FR | 2230402 | A | 20-12-1974 |
| | | | DE | 2415349 | A | 03-10-1974 |
| US 4330633 | A | 18-05-1982 | JP | 1514890 | C | 24-08-1989 |
| | | | JP | 57038325 | A | 03-03-1982 |
| | | | JP | 63053135 | B | 21-10-1988 |
| | | | JP | 1511325 | C | 09-08-1989 |
| | | | JP | 57038326 | A | 03-03-1982 |
| | | | JP | 63053136 | B | 21-10-1988 |
| | | | DE | 3103787 | A | 18-03-1982 |
| | | | GB | 2082156 | A,B | 03-03-1982 |
| WO 9406544 | A | 31-03-1994 | FR | 2695569 | A | 18-03-1994 |
| | | | AT | 145152 | T | 15-11-1996 |
| | | | CA | 2123506 | A | 31-03-1994 |
| | | | DE | 69305971 | D | 19-12-1996 |
| | | | DE | 69305971 | T | 06-03-1997 |
| | | | EP | 0613395 | A | 07-09-1994 |
| | | | JP | 7503656 | T | 20-04-1995 |
| | | | US | 5573655 | A | 12-11-1996 |
| US 5385874 | A | 31-01-1995 | US | 5302258 | A | 12-04-1994 |
| | | | US | 5441610 | A | 15-08-1995 |
| | | | CA | 2124674 | A,C | 02-09-1993 |
| | | | DE | 69305341 | D | 14-11-1996 |
| | | | DE | 69305341 | T | 15-05-1997 |
| | | | EP | 0642480 | A | 15-03-1995 |
| | | | JP | 7504354 | T | 18-05-1995 |
| | | | WO | 9316966 | A | 02-09-1993 |
| US 4212891 | A | 15-07-1980 | JP | 1160692 | C | 10-08-1983 |
| | | | JP | 54044186 | A | 07-04-1979 |
| | | | JP | 57056727 | B | 01-12-1982 |
| | | | JP | 1032312 | C | 29-01-1981 |
| | | | JP | 54044259 | A | 07-04-1979 |
| | | | JP | 55025343 | B | 05-07-1980 |
| | | | JP | 54072774 | A | 11-06-1979 |
| JP 04346774 | A | 02-12-1992 | AUCUN | | | |
| US 4151060 | A | 24-04-1979 | AU | 524043 | B | 26-08-1982 |
| | | | AU | 4378779 | A | 09-08-1979 |
| | | | BE | 873870 | A | 01-08-1979 |
| | | | CA | 1104652 | A | 07-07-1981 |
| | | | DE | 2903655 | A | 02-08-1979 |
| | | | FR | 2416469 | A | 31-08-1979 |

EPO FORM P0460

**ANNEXE AU RAPPORT DE RECHERCHE EUROPEENNE
RELATIF A LA DEMANDE DE BREVET EUROPEEN NO.**  EP 99 40 1619

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

04-11-1999

| Document brevet cité au rapport de recherche | | Date de publication | Membre(s) de la famille de brevet(s) | | Date de publication |
|---|---|---|---|---|---|
| US 4151060 | A | | GB 2013894 A,B<br>IT 1110695 B<br>JP 54111394 A | | 15-08-1979<br>23-12-1985<br>31-08-1979 |
| US 4967295 | A | 30-10-1990 | CA 1307037 A<br>DE 3883298 A<br>DE 3883298 T<br>EP 0295054 A<br>JP 2001004 A | | 01-09-1992<br>23-09-1993<br>10-03-1994<br>14-12-1988<br>05-01-1990 |
| EP 428414 | A | 22-05-1991 | JP 2034308 C<br>JP 3161014 A<br>JP 7061414 B<br>CA 2030141 A,C<br>DE 69012280 D<br>DE 69012280 T<br>US 5118261 A | | 19-03-1996<br>11-07-1991<br>05-07-1995<br>17-05-1991<br>13-10-1994<br>05-01-1995<br>02-06-1992 |
| WO 9531093 | A | 23-11-1995 | AU 2401395 A | | 05-12-1995 |
| WO 9101274 | A | 07-02-1991 | FR 2649970 A<br>AT 99269 T<br>AU 6070390 A<br>CA 2064225 A<br>DE 69005637 D<br>DE 69005637 T<br>DK 483259 T<br>EP 0483259 A<br>ES 2062542 T<br>JP 4506792 T<br>US 5227257 A | | 25-01-1991<br>15-01-1994<br>22-02-1991<br>19-01-1991<br>10-02-1994<br>28-04-1994<br>31-01-1994<br>06-05-1992<br>16-12-1994<br>26-11-1992<br>13-07-1993 |
| FR 2698016 | A | 20-05-1994 | AUCUN | | |

EPO FORM P0460

Pour tout renseignement concernant cette annexe : voir Journal Officiel de l'Office européen des brevets, No.12/82